# EUROPÄISCHE PATENTSCHRIFT

(11) **EP 0 697 952 B1**
(45) Veröffentlichungstag und Bekanntmachung des Hinweises auf die Patenterteilung: **05.03.1997**
(21) Anmeldenummer: 94916162.4
(22) Anmeldetag: 28.04.1994
(51) Int. Cl.: B29C 65/34, F16L 47/02, H01R 13/66, H01R 13/24

(54) **ELEKTRISCHE STECKVERBINDUNG FÜR THERMOPLASTISCHE ELEKTRO-SCHWEISSMUFFEN**
ELECTRIC PLUG CONNECTOR FOR THERMOPLASTIC ELECTRIC WELDING SLEEVES
CONNECTEUR ELECTRIQUE A FICHES POUR MANCHONS THERMOPLASTIQUES DE SOUDAGE ELECTRIQUE

(30) Priorität: 10.05.1993 CH 1426/93
(43) Veröffentlichungstag der Anmeldung: 28.02.1996
(73) Patentinhaber: WAVIN B.V., NL-8011 CW Zwolle (NL)
(72) Erfinder: AMACHER, Urs, CH-4556 Aeschi (CH); JEKER, Bruno, CH-4500 Solothurn (CH)
(74) Vertreter: Feldmann, Clarence Paul
(86) Internationale Anmeldenummer: EP9401338
(87) Internationale Veröffentlichungsnummer: WO9426502

(56) Entgegenhaltungen:
- EP-A- 0 353 912
- FR-A- 2 611 945
- GB-A- 2 119 744
- GB-A- 2 137 026
- PATENT ABSTRACTS OF JAPAN vol. 013, no. 449 (M-878) 9. Oktober 1989 & JP,A,01 172 692 (MITSUI PETROCHEM IND LTD)

## Beschreibung

Die vorliegende Erfindung betrifft eine elektrische, kombinierte Steckverbindung zur Erstellung einer Starkstromverbindung zum Schweissen und einer Schwachstromverbindung für eine Datenübermittlung zwischen einem Speisegerät und einer thermoplastischen Elektro-Schweissmuffe, als elektrisch schweissbares Verbindungselement, wobei die Muffe einen eingebauten Erwärmungsbauteil und einen elektronischen Informationsträger aufweist.

Elektro-Schweissmuffen werden zur Verbindung von Rohrleitungsteilen aus thermoplastischem Kunststoff verwendet. Die Elektro-Schweissmuffen weisen hierfür eingebaute Erwärmungsbauteile, beispielweise Heizwendel aus Widerstandsdrähten, auf. Wird über diese Heizwendel ein Stromkreis geschlossen, so führt die erzeugte Wärme zur Erhitzung des Materials an den Grenzzonen von Rohr- oder Rohrleitungsteil und Elektro-Schweissmuffe, die somit miteinander verbunden werden. Um eine einwandfreie Schweissverbindung herzustellen, muss die von einem Speisegerät gelieferte Schweissenergie optimal auf die betreffende Elektro-Schweissmuffe abgestimmt sein. Damit das Speisegerät automatisch die Elektro-Schweissmuffe identifizieren und ihr eindeutig die korrekte Schweissenergie zuordnen kann, sind Elektro-Schweissmuffen bekannt, die einen elektronischen Informationsträger aufweisen. In diesen Informationsträgern, die beispielsweise aus codierten Widerständen oder Mikro-Chips bestehen, sind die für die Schweissung notwendigen Daten gespeichert, die vom Speisegerät gelesen werden können.

Vor dem Schweissprozess müssen somit zwei verschiedene Stromverbindungen zwischen Speisegerät und Elektro-Schweissmuffe hergestellt werden. Es sind dies eine Starkstrom- oder Speisestromverbindung zum Schweissen und eine Schwachstrom- oder Steuerstromverbindung zur Uebermittlung der Daten.

Aus GB-A-2'137'026 ist eine Steckverbindung zwischen Speisegerät und Elektro-Schweissmuffe bekannt, die gleichzeitig eine Starkstrom- wie auch eine Schwachstromverbindung herstellt. Die Elektro-Schweissmuffe weist zwei Stifte für die Schweisstromverbindung auf. Einem der Stifte benachbart ist ein weiterer, dünnerer Stift angeordnet, der mit dem Informationsträger, einem Codewiderstand, verbunden ist. Ein Stecker, der Buchsen für den dickeren Stift der Starkstromverbindung und den dünneren Stift der Schwachstromverbindung aufweist, ist das Gegenstück dieser kombinierten Steckverbindung. Beim anderen, einzelnen Stift der Schweissstromverbindung wird als Gegenstück ein einfacher Starkstromstecker mit einer Buchse eingesetzt.

Von der Patentanmelderin sind neue Elektro-Schweissmuffen entwickelt worden, welche nicht nur eine Typenerkennung mittels einem Codewiderstand zulassen, sondern einen vollständig bidirektionalen Datenaustausch zwischen der Elektro-Schweissmuffe und einem Speisegerät mit Datenaufzeichnung ermöglichen. Ueblicherweise werden die Anschlüsse von einem Schaltkreis auf einer Leiterplatte über Kontakte und Verbindungskabel zu einem mehrpoligen Steckersockel geführt, in welchem ein entsprechender mehrpoliger Stecker eingesteckt werden kann. Diese konventionelle Verbindungsform lässt sich in der Anwendung bei einer Elektro-Schweissmuffe sowohl aus Platz-, wie auch aus Kostengründen nicht realisieren.

Die vorliegende Erfindung hat sich daher die Aufgabe gestellt, eine Steckverbindung für Elektro-Schweissmuffen der eingangsgenannten Art zu schaffen, welche die genannten Schwierigkeiten überwindet.

Diese Aufgabe löst eine kombinierte Steckverbindung gemäss Oberbegriff des Patentanspruches 1, bei welcher muffenseitig eine Leiterplatte vorhanden ist, auf der sich der Informationsträger befindet, wobei durchkontaktierte Löcher der Leiterplatte eine Kontaktmöglichkeit in Form einer Steckeraufnahme für die Schwachstromverbindung bilden und speisegerätseitig ein Schwachstromstecker Stifte aufweist.

Die aufgezeigte Lösung geht von der Erkenntnis aus, dass die Verbindung für die Datenübertragung wahrend der gesamten Lebenszeit der Elektro-Schweissmuffe nur einige, wenige Male erstellt werden muss, so dass üblicherweise bestehende Qualitätskriterien hier nicht zutreffen.

In den Zeichnungen ist ein Ausführungsbeispiel des Erfindungsgegenstandes dargestellt und in der nachfolgenden Beschreibung erläutert. Es zeigt:
- Figur 1: eine schematische Darstellung einer Elektro-Schweissmuffe;
- Figur 2: einen Querschnitt durch einen Teil der Elektro-Schweissmuffe, welcher eine kombinierte Steckeraufnahme für eine Stark- und eine Schwachstromverbindung in vergrösserter Darstellung zeigt;
- Figur 3: eine Ansicht der Steckeraufnahme in der elektro-Schweissmuffe von oben;
- Figur 4: eine Darstellung eines kombinierten Steckers für eine Stark- und eine Schwachstromverbindung;
- Figur 5: einen Querschnitt durch einen Teil des kombinierten Steckers;
- Figur 6: eine Darstellung des kombinierten Steckers von oben;
- Figur 7: einen Querschnitt durch eine weitere Ausführungsform des kombinierten Steckers;
- Figur 8: eine Darstellung dieser Ausführungsform von oben.

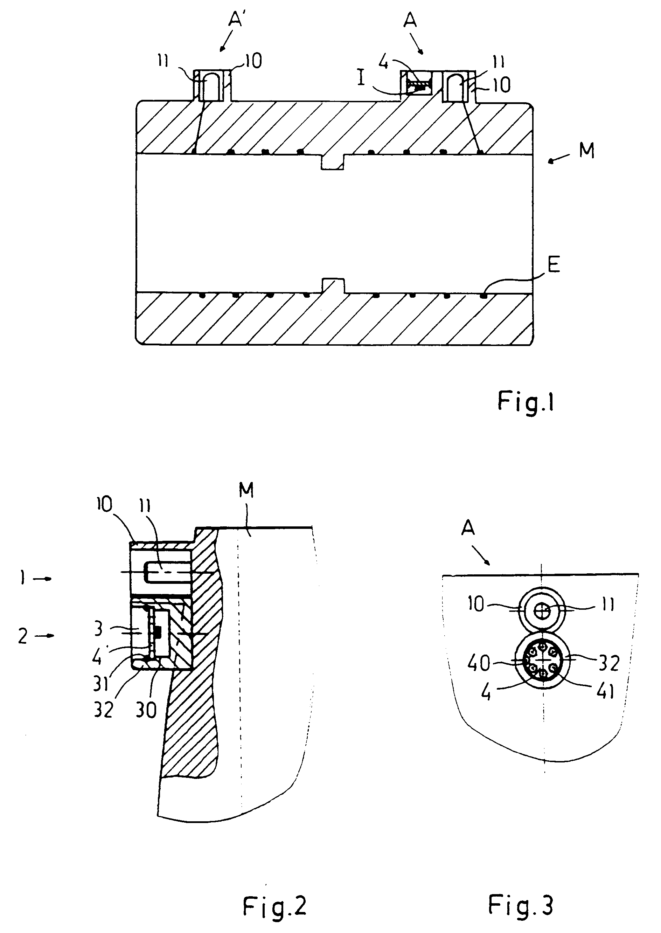

In Figur 1 ist eine Elektro-Schweissmuffe M, als elektrisch schweissbares Verbindungselement, mit eingebautem Erwärmungsbauteil E in Form eines Heizwendels und einem elektronischen Informationsträger I dargestellt. Aus der Elektro-Schweissmuffe M ragen zwei Stifte 11 heraus, wobei beide Stifte je mit einem Schutzkragen 10 aus Kunststoff umgeben sind. Jeder Stift 11 ist mit einem Ende des Widerstanddrahtes des Heizwendels verbunden. In der Nähe einer der Schutzkrägen 10 ist der Informationsträger I angeordnet.

Der Informationsträger I befindet sich, wie in der Figur 2 ersichtlich ist, in einer Aussparung 3 der Elektro-Schweissmuffe M. Die Aussparung 3 weist eine Schutz- und Führungsringwand 32 aus Kunststoff auf, die ungefähr die gleiche Höhe wie der Schutzkragen 10 um den Stift 11 hat und an diesen Schutzkragen 10 angrenzt. Die Aussparung 3 weist auf einer definierten Höhe auf ihrem inneren Umfang zwei umlaufende oder unterbrochene, aus Kunststoff angeformte Rippen 30,31 auf. Zwischen diesen Rippen befindet sich eine, in diesem Beispiel runde, Leiterplatte 4, so dass die untere Rippe 30 als Sockel und die obere Rippe 31 als Fixierungsmittel dient. Der Informationsträger I selber befindet sich auf dieser Leiterplatte 4, so dass er in den durch die Leiterplatte 4 abgeschlossenen Freiraum der Aussparung 3 hineinragt. Die Leiterplatte 4 mit dem Informationsträger kann somit nach der Herstellung der Elektro-Schweissmuffe in diese Aussparung 3 gedrückt werden und ist somit fixiert. Damit die Leiterplatte 4 stets dieselbe Ausrichtung hat, sind Positionierelemente vorhanden. Die Leiterplatte 4 weist an einer oder mehreren Stellen ihres Umfanges Einbuchtungen 40 auf, wie in Figur 3 dargestellt. Das Pendant dazu sind eine oder mehrere Positioniernasen, beispielsweise aus Kunststoff, die an einer oder mehreren Stellen des Innenumfanges der Aussparung 3 angeformt sind. In der Leiterplatte 4 befinden sich zudem durchkontaktiert Löcher 41, die beispielsweise kreisförmig angeordnet sind. Diese durchkontaktierten Löcher 41 sind so angeordnet, dass sie von der offenen Seite der Aussparung 3 gut zugänglich sind. In diesem Ausführungsbeispiel sind sechs derartige durchkontaktierte Löcher 41 vorhanden.

Die Elektro-Schweissmuffe weist also zwei verschiedene Steckeraufnahmen beziehungsweise Kontaktmöglichkeiten auf. Die eine Aufnahme ist eine einfache Steckeraufnahme A', die aus einem Stift für die Erstellung eines Teils einer Starkstromverbindung zwischen Speisegerät und Elektro-Schweissmuffe besteht. In diese Aufnahme ist ein handelsüblicher Stecker mit einer Buchse einsteckbar. Die andere Aufnahme ist eine kombinierte Steckeraufnahme A, die einerseits zur Erstellung des anderen Teils der Starkstromverbindung dient und andererseits eine Verbindung zum Informationsträger 4 herstellt.

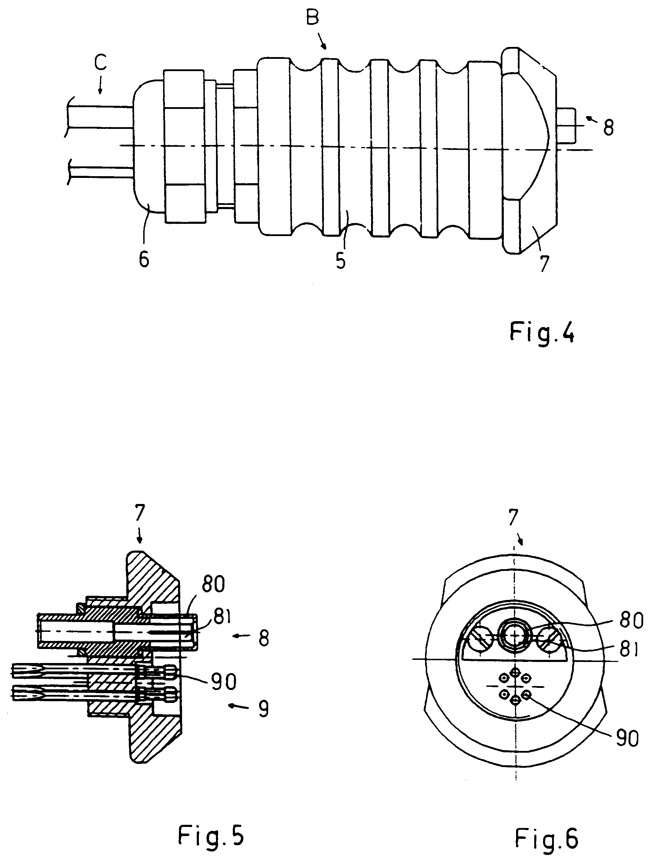

In Figur 4 ist ein kombinierter Stecker B dargestellt, der zur Herstellung der Verbindung zwischen Speisegerät und Elektro-Schweissmuffe M dient. Er weist einen beispielsweise gerippten Handgriff 5 auf, mit dem er gehalten und in die kombinierte Steckeraufnahme A der Elektro-Schweissmuffe M gesteckt werden kann. Speisegerätseitig ist er mit einem Abschlusselement 6 mit Zugsicherung abgeschlossen, aus dem ein isoliertes Kabel C führt, das mit dem Speisegerät verbunden oder verbindbar ist. Muffenseitig weist der kombinierte Stecker B einen Kopfteil 7 auf, in welchem die Steckerelemente angeordnet sind.

Figur 5 zeigt einen Querschnitt und Figur 6 eine Ansicht dieses Kopfteils 7. Er weist eine Buchse 81 auf, die geschlitzt ist. Die Buchse 81 ist ebenfalls von einem Schutzkragen 80 umgeben. Neben der Buchse 81, ausserhalb des Schutzkragens 80, sind dünne Steckerstifte 90 gefedert angeordnet, die an ihren vorderen Enden Spitzen aufweisen können. Die Spitzen der Steckerstifte 90 dienen dazu, allfällige Oxidschichten zu durchstossen, damit ein optimaler Kontakt gewährleistet ist. In diesem Ausführungsbeispiel sind sechs derartige Steckerstifte 90 vorhanden. Die Längen von Buchse 81 und Steckerstifte 90 sind vorzugsweise so bemessen, dass die Buchse 81 die dünnen Stifte 90 überragt.

Die Anordnung der einzelnen Elemente des Steckers B entsprechen den zugehörigen Pendants der Steckeraufnahme A der Elektro-Schweissmuffe M:
Der Stift 11 in der Elektro-Schweissmuffe passt in die Buchse 81 des Steckers, der Schutzkragen 80 um die Buchse 81 in den Schutzkragen 10 des Stiftes 11. Da die Buchse 81 geschlitzt ist, ist die Verbindung radial gefedert und gewährleistet den elektrischen Kontakt. Dieser Teil der kombinierten Steckverbindung stellt somit die Starkstromverbindung zum Schweissen her.
Die dünnen, Spitzen aufweisenden Stifte 90 des Steckers B passen auf die durchkontaktierten Löcher 41 in der Leiterplatte 4. Die Steckerstifte werden nicht, wie sonst üblich, in Steckeraufnahmen eingesteckt, sondern nur auf diese aufgesetzt. Da die Steckerstifte 90 jedoch gefedert sind, ist der elektrische Kontakt trotzdem gewährleistet. Dieser Teil der kombinierten Steckverbindung stellt somit die Schwachstromverbindung für den Datentransfer zwischen Informationsträger und Speisegerät her.

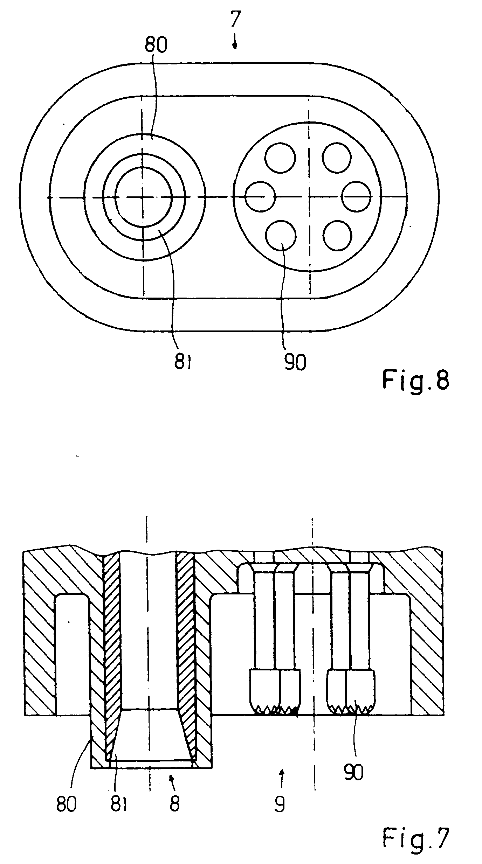

In den Figuren 7 und 8 ist der Kopfteil einer anderen Ausführungsform eines Steckers der erfindungsgemässen Steckverbindung dargestellt. Der Stecker weist im Gegensatz zu der oben beschriebenen Ausführungsform eine ovale anstelle einer runden Aussenform des Steckers auf. Dementsprechend ist die Anordnung und der Aufbau der in der Muffe befindlichen Steckeraufnahme, die hier nicht dargestellt ist. Durch diese Ausführungsform wird eine Steckverbindung mit kleinerem Platzbedarf erzielt.

Der kombinierte Stecker B besteht somit aus einem Stecker für eine Starkstrom- oder Speisestromverbindung 8 und einem Stecker für eine Schwachstrom- oder Steuerstromverbindung 9, die durch den Schutzkragen 80 gegeneinander isoliert sind. Die Elektro-Schweissmuffe M weist ihrerseits die kombinierte Steckeraufnahme A mit einer Steckeraufnahme 1 für den Starkstromstecker und einer Steckeraufnahme 2 für den Schwachstromstecker auf. Beide Steckeraufnahmen 1,2 sind durch eine Kunststoffwand gegeneinander isoliert.

Da die kombinierte Steckverbindung zwei verschieden geformte Teile für den Stark- und den Schwachstromteil aufweist, ist sie eindeutig und kann nicht falsch zusammengefügt werden. Zudem bilden der Schwachstrom- (9) und der Starkstromteil (8) speisegerätseitig eine unzertrennliche Einheit. Dadurch wird eine eindeutige, unmanipulierte Energiedosierung des elektrisch schweissbaren Verbindungselementes garantiert. Da die Buchse 81 des Steckers für die Starkstromverbindung den spitzen Steckerstiften 90 für die Schwachstromverbindung vorsteht und somit zuerst in den Schutzkragen 10 der Starkstromaufnahme 1 geschoben wird, werden die dünnen Steckerstifte 90 beim Einstecken geführt. Sie können nicht verbogen werden und auch nicht die Leiterplatte 4 beschädigen. Die Steckerstifte 90 für die Schwachstromverbindung sind vorne zugespitzt, damit sie allfällige durch Lötzinn verschlossenen Löcher durchbrechen können.

Durch die erfindungsgemässe kombinierte Steckverbindung ist somit der Schwachstromstecker 9 direkt auf die Leiterplatte 4 mit dem Informationsträger I steckbar. Es wird kein zusätzliches Element als Aufnahme für den Stecker, beispielsweise eine zusätzliche Buchse, und keine elektrische Verbindungsleiste für die Aufnahme der Leiterplatte benötigt. Dadurch ist die Grösse der Steckeraufnahme A in der Elektro-Schweissmuffe auf das Minimum beschränkt. Zudem ist sie einfach und kostengünstig herstellbar.

Die erfindungsgemässe Steckverbindung lässt sich auch bei anderen elektrisch schweissbaren, thermoplastischen Verbindungselementen, wie Elektro-Schweissfittings oder Anbohrschellen, anwenden.

## Patentansprüche

1. Elektrische, kombinierte Steckverbindung zur Erstellung einer Starkstromverbindung zum Schweissen und einer Schwachstromverbindung für eine Datenübermittlung zwischen einem Speisegerät und einer thermoplastischen Elektro-Schweissmuffe (M), als elektrisch schweissbares Verbindungselement, wobei die Muffe einen eingebauten Erwärmungsbauteil (E) und einen elektronischen Informationsträger (I) aufweist, dadurch gekennzeichnet, dass muffenseitig eine Leiterplatte (4) vorhanden ist, auf der sich der Informationsträger (I) befindet, wobei durchkontaktierte Löcher (41) der Leiterplatte (4) eine Kontaktmöglichkeit in Form einer Steckeraufnahme (2) für die Schwachstromverbindung bilden und speisungsgerätseitig ein Schwachstromstecker (9) Stifte (90) aufweist.

2. Steckverbindung nach Anspruch 1, dadurch gekennzeichnet, dass die Stifte (90) mindestens eine Spitze aufweisen.

3. Steckverbindung nach Anspruch 1, dadurch gekennzeichnet, dass die Starkstromverbindung eine Stift-Buchsen-Verbindung (11,81) ist.

4. Steckverbindung nach Anspruch 3, dadurch gekennzeichnet, dass die Buchse (81) radial gefedert ist.

5. Steckverbindung nach Anspruch 1, dadurch gekennzeichnet, dass ein die Starkstromverbindung herstellende Teil (8,81) einen die Schwachstromverbindung herstellenden Teil (9,90) überragt.

6. Steckverbindung nach Anspruch 1, dadurch gekennzeichnet, dass die Leiterplatte (4) mittels Positionierelementen (40) eindeutig in die Elektro-Schweissmuffe (M) befestigbar ist.

7. Steckverbindung nach Anspruch 1, dadurch gekennzeichnet, dass die Stifte (90) des Schwachstromsteckers (9) kontaktgefedert sind.

8. Steckverbindung nach Anspruch 1, dadurch gekennzeichnet, dass die Teile (11,81) für die Starkstromverbindung von den Teilen (41,90) der Schwachstromverbindung durch Kunststoffwände (10,80) getrennt sind.

9. Steckverbindung nach Anspruch 1, dadurch gekennzeichnet, dass die Schwachstromteile (41,90) und die Starkstromteile (11,81) zur eindeutigen Erstellung der Verbindung unterschiedlich geformt sind.

10. Steckverbindung nach Anspruch 1, dadurch gekennzeichnet, dass speisegerätseitig ihr Schwachstrom- (9) und ihr Starkstromteil (8) eine unzertrennliche Einheit bilden.

## Claims

1. Combined, electric plug connection for producing a heavy current connection for welding and a weak current connection for data communication between a feed device and a thermoplastic electric welded sleeve (M), as the electrically weldable connecting element, the sleeve having an incorporated heating component (E) and a electronic information carrier (I), characterized in that on the sleeve side is provided a circuit board (4), which carries the information carrier (I), through-plated holes (41) of the circuit board (4) forming a contact possibility in the form of a plug receptacle (2) for the weak current connection and on the feed device side a weak current plug (9) has pins (90).

2. Plug connection according to claim 1, characterized in that the pins (90) have at least one tip.

3. Plug connection according to claim 1, characterized in that the heavy current connection is a pin-socket connection (11, 81).

4. Plug connection according to claim 3, characterized in that the socket (81) is radially spring-mounted.

5. Plug connection according to claim 1, characterized in that a part (8, 81) producing the heavy current connection projects over a part (9, 90) producing the weak current connection.

6. Plug connection according to claim 1, characterized in that the circuit board (4) is clearly fixable in the electric welded sleeve (M) by means of positioning elements (40).

7. Plug connection according to claim 1, characterized in that the pins (90) of the weak current plug (9) are contact-sprung.

8. Plug connection according to claim 1, characterized in that the parts (11, 81) for the heavy current connection are separated from the parts (41, 90) for the weak current connection by plastic walls (10, 80).

9. Plug connection according to claim 1, characterized in that the weak current parts (41, 90) and the heavy current parts (11, 81) are differently shaped for the clear production of the connection.

10. Plug connection according to claim 1, characterized in that on the feed device side the weak current part (9) and heavy current part (8) form an inseparable unit.

## Revendications

1. Connecteur électrique combiné à fiches pour établir une liaison à courant fort destinée au soudage et une liaison à courant faible pour une transmission de données entre un appareil d'alimentation et un manchon thermoplastique de soudage électrique (M) faisant office d'élément de liaison soudable électriquement, ce manchon comportant un élément d'échauffement intégré(E) et un support d'informations électroniques(I), caractérisé par le fait qu'un circuit imprimé (4) se trouve du côté du manchon sur lequel se trouve le support d'informations (I), des trous (41) de contact à travers le circuit imprimé (4) formant un dispositif de contact sous la forme d'un réceptacle de fiche (2) pour la liaison à courant faible, un connecteur (9) à courant faible présentant des broches (90) du côté de l'appareil d'alimentation.

2. Connecteur à fiches selon la revendication 1, caractérisé par le fait que les broches (90) présentent au moins une pointe.

3. Connecteur à fiches selon la revendication 1, caractérisé par le fait que la liaison à courant fort est une liaison fiche-douille (11, 81).

4. Connecteur à fiches selon la revendication 3, caractérisé par le fait que la douille (81) est soumise à l'effet d'un ressort dans le sens radial.

5. Connecteur à fiches selon la revendication 1, caractérisé par le fait qu'une pièce (8, 81), établissant la liaison à courant fort, dépasse d'une pièce de connexion (9, 90) établissant la liaison à courant faible.

6. Connecteur à fiches selon la revendication 1, caractérisé par le fait que le circuit imprimé (4) peut être fixé précisément dans le manchon de soudage électrique (M), au moyen d'éléments de positionnement (40).

7. Connecteur à fiches selon la revendication 1, caractérisé par le fait que les broches (90) du connecteur à courant faible (9) établissent le contact par un effet de ressort.

8. Connecteur à fiches selon la revendication 1, caractérisé par le fait que les pièces (11, 81), destinées à la liaison à courant fort, sont séparées des pièces (41, 90) destinées à la liaison à courant faible par des cloisons en plastique (10, 80).

9. Connecteur à fiches selon la revendication 1, caractérisé par le fait que les pièces à courant faible (41, 90) et les pièces à courant fort (11, 81) présentent une forme différente, afin d'établir la liaison sans risque d'erreur.

10. Connecteur à fiches selon la revendication 1, caractérisé par le fait que sa partie à courant faible (9) et à courant fort (8), forment une unité inséparable du côté de l'appareil d'alimentation.
